# EUROPÄISCHE PATENTSCHRIFT

(11) **EP 1 588 877 B1**
(45) Veröffentlichungstag und Bekanntmachung des Hinweises auf die Patenterteilung: **11.06.2008**
(21) Anmeldenummer: 05006509.3
(22) Anmeldetag: 24.03.2005
(51) Int. Cl.: B60H 1/34

(54) **Lüftungsdüse**
Air nozzle
Buse d'aération

(30) Priorität: 23.04.2004 DE 102004019755
(43) Veröffentlichungstag der Anmeldung: 26.10.2005
(73) Patentinhaber: fischer automotive systems GmbH, 72160 Horb (DE)
(72) Erfinder: Leopold, Gunter, 72270 Baiersbronn (DE)

(56) Entgegenhaltungen:
- WO-A-03/082617
- DE-U- 1 917 945
- DE-U1- 20 313 857

## Beschreibung

Die Erfindung betrifft eine Lüftungsdüse, insbesondere zum Einbau in ein Kraftfahrzeug mit den Merkmalen des Oberbegriffs des Anspruchs 1.

Aus der Druckschrift DE 203 13 857 U1 ist eine Lüftungsdüse mit einem sphärisch geformten Düsenkopf bekannt. Der Düsenkopf weist mehrere Ausströmöffnungen auf und ist im Gehäuse dreh- und schwenkbar gelagert, so dass der ausströmende Luftstrom in seiner Richtung gesteuert werden kann. Die Lagerung wird durch einen Gehäuseabschnitt erreicht, der sich um einen Teil des Düsenkopfes bandartig erstreckt, wobei der Düsenkopf mit mehr als seiner Hälfte im Gehäuse angeordnet ist. Durch die sphärische Form bildet das Gehäuse eine Hinterschneidung für den Düsenkopf, wodurch ein Halt in alle Richtungen erreicht wird. Allerdings muss der entsprechende Gehäuseabschnitt bei der Montage zum Fügen des Düsenkopfes etwas aufgeweitet oder der Düsenkopf etwas gestaucht werden. Hierdurch und aufgrund der fertigungsbedingten Ungenauigkeiten ist es kaum möglich zu sichern, dass der Düsenkopf weder mit Spiel noch mit starker Reibung gelagert ist. Dies hat einerseits den Nachteil einer negativen Produktanmutung, da der Düsenkopf droht, entweder lose gelagert zu sein und damit Wind- und Klappergeräusche zu provozieren, oder so eng gelagert zu sein, dass eine Verstellung schwergängig wird.

Die gattungsgemäße WO 03/082 617 offenbart eine Lüftungsdüse mit einem sphärisch geformten Düsenkopf mit Ausströmöffnungen, welcher in Gehäuse dreh- und schwenkbar gelagert ist, wobei die Lagerung ein Federelement aufweist.

Der Erfindung liegt daher die Aufgabe zu Grunde, eine derartige Lüftungsdüse mit verbesserter Lagerung zu schaffen.

Diese Aufgabe wird erfindungsgemäß durch die Merkmale des Anspruchs 1 gelöst. Die Lüftungsdüse weist ein Federelement auf. Dies ermöglicht eine Lagerung des Düsenkopfes mit einer definierten Kraft gegen eine Lagerfläche, die keine Hinterschneidung aufweist. Vorzugsweise dient das Gehäuse mit einem umlaufenden Bund als Gegenlager, es kann aber auch ein separates Teil vorgesehen sein. Das Federelement kann dabei in Ausströmrichtung wirken, dann wirkt der Bund des Gehäuses an der Außenseite des Düsenkopfes als Gegenlager. Alternativ kann das Federelement aber auch auf der Ausströmseite angeordnet sein und ein im Gehäuse liegender Bund als Gegenlager dienen. Grundsätzlich können statt einem einzigen Federelement auch mehrere über einen Umfang des Düsenkopfes ringförmig angeordnete Einzelfederelemente angeordnet sein. Vorzugsweise ist das Federelement jedoch als Ring mit Federarmen ausgeführt, wobei statt Federarmen auch Bügel, Laschen oder dgl. einstückig an einem umlaufenden Federelement angeordnet sein können. In einer bevorzugten Ausführungsform weist der Düsenkopf auf seiner den Austrittsöffnungen abgewandten Seite einen Vielzahl von Rastvertiefungen auf, in die die Federarme oder dgl. im geöffneten Zustand eingreifen. Hierdurch wird erreicht, dass der Düsenkopf in der jeweils eingestellten Position gehalten wird, aber gleichzeitig durch manuelle Betätigung ein Drehen und Schwenken möglich bleibt.

Zum Verschließen der Lüftungsdüse wird erfindungsgemäß der Düsenkopf selbst als Bedienelement für das Ventil genutzt, wobei das Ventil über eine Verschiebung des Düsenkopfes gegenüber dem Gehäuse erfolgt. Zum Schließen der Lüftungsdüse durch Verschiebung des Düsenkopfes gegenüber dem Gehäuse weist die Lüftungsdüse erfindungsgemäß einen axial wirkenden Verschlussmechanismus auf. Hierdurch wird erreicht, dass die Lüftungsdüse beispielsweise durch Druck auf den Düsenkopf geschlossen und durch Zug geöffnet werden kann. Vorzugsweise ist das Ventil derart gestaltet, dass der Düsenkopf eine beispielsweise umlaufende Rastrille aufweist, in die in geschlossenem Zustand das Federelement eingreift. Das eigentliche Schließen erfolgt durch ein Schließelement, dass in seiner Geometrie mit der Anströmöffnung des Düsenkopfes korrespondiert, also beispielsweise teilsphärisch ausgebildet ist. In einer besonders vorteilhaften Ausführungsform ist das Federelement gleichzeitig als Schließelement ausgebildet, so dass die Lüftungsdüse aus wenigen Teilen gebildet werden kann.

Um eine möglichst gute Steuerung der Luftstromrichtung zu erreichen, weist der Düsenkopf nicht lediglich Öffnungen auf der Abströmseite auf, sondern zusätzlich Luftleitelemente, beispielsweise in Form von Lamellen oder dgl.

Die Erfindung wird nachfolgend anhand zweier in der Zeichnung dargestellter Ausführungsbeispiele näher erläutert. Es zeigen:
- Figur 1: eine erfindungsgemäße Lüftungsdüse in perspektivischer Schnittdarstellung in geöffnetem Zustand; und
- Figur 2: dieselbe Lüftungsdüse in geschlossenem Zustand.

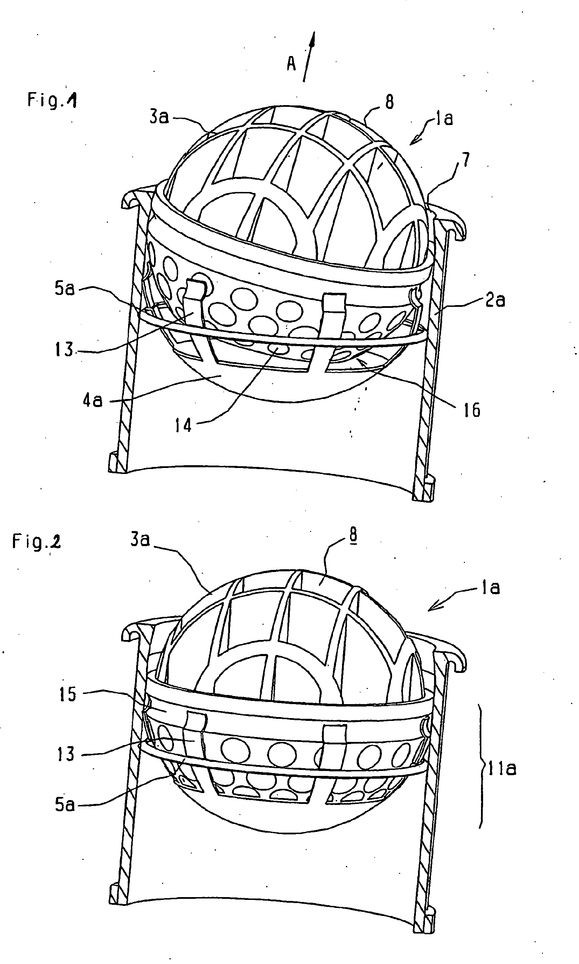

In den Figuren 1 und 2 ist eine Ausführungsform der Lüftungsdüse 1 a in geöffnetem (Figur 1) bzw. geschlossenem (Figur 2) Zustand dargestellt. Bei diesem Ausführungsbeispiel sind das Federelement 5a und das Schließelement 4a einstückig, wodurch ein Bauteil eingespart wird. Das Öffnen und Schließen erfolgt durch Drücken bzw. Ziehen des Düsenkopfes 3a entlang der Längsrichtung des Gehäuses 2a. Das Federelement 5a weist mehrere Federarme 13 auf, die den Düsenkopf 3a in geöffnetem Zustand gegen den Bund 7 drückt. Dieser erlaubt wiederum ein Verschwenken und Drehen des Düsenkopfes. Durch den Eingriff der Federarme in kleine Rastvertiefungen 14 ergibt sich eine Verrastung in der jeweiligen Stellung, wodurch ein besonderer Bedienkomfort erreicht wird. Zum Schließen der Lüftungsdüse 1 a wird der Düsenkopf 3a entgegen der Ausströmrichtung A in das Gehäuse 2a gedrückt und die Luftleitelemente 8 parallel zur Längsrichtung des Gehäuses 2 ausgerichtet. Hierdurch greifen die Federarme 13 in eine umlaufende Rastrille 15 des Düsenkopfes 3a ein und halten diesen in dieser Position. Das Ventil 11a wird bei diesem Ausführungsbeispiel durch das Schließelement 5a und den Düsenkopf 3a selbst gebildet. Das sphärisch geformte Schließelement 5a entspricht in seiner Form und Größe der Anströmöffnung 16 des Düsenkopfes 3a und deckt daher diese im geschlossenen Zustand vollständig ab. Zum Öffnen kann der Bediener zwischen die Luftleitelemente 8 greifen und den Düsenkopf aus der Verrastung ziehen.

## Patentansprüche

1. Lüftungsdüse, insbesondere zum Einbau in ein Kraftfahrzeug, mit einem sphärisch geformten Düsenkopf (3a) mit Ausströmöffnungen, welcher in einem Gehäuse (2a) dreh- und schwenkbar gelagert ist wobei die Lagerung ein Federelement (5a) aufweist, **dadurch gekennzeichnet dass** die Lüftungsdüse ein Ventil derart aufweist, dass das Öffnen und Schließen durch eine Verschiebung des Düsenkopfes (3a) gegenüber dem Gehäuse (2a) erfolgt.

2. Lüftungsdüse nach Anspruch 1, **dadurch gekennzeichnet, dass** das Gehäuse (2a) einen Bund (7) als Gegenlager zum Federelement (5a) aufweist.

3. Lüftungsdüse nach Anspruch 1, **dadurch gekennzeichnet, dass** das Federelement (5a) als Ring mit Federarmen (13) ausgeführt ist.

4. Lüftungsdüse nach Anspruch 3, **dadurch gekennzeichnet, dass** der Düsenkopf (3a) eine Vielzahl von Rastvertiefungen (14) aufweist in die die Federarme (13) im geöffneten Zustand eingreifen.

5. Lüftungsdüse nach Anspruch 1, **dadurch gekennzeichnet, dass** die Lüftungsdüse (1a) durch ein in Bezug auf das Gehäuse (2a) axial wirkendes Ventil (11a) schließbar ist.

6. Lüftungsdüse nach Anspruch 1, **dadurch gekennzeichnet dass** das Ventil (11a) aus einer Rastrille (15) am DOsenkopf (3a), in den in der geschlossenen Stellung das Federelement (5a) eingreift, und ein mit der Anströmöffnung (18) des Düsenkopfes (3a) geometrisch korrespondierendes SchliefSelement (4a) gebildet ist.

7. Lüftungsdüse nach Anspruch 6, **dadurch gekennzeichnet, dass** das Federelement (5a) und das Schließelement (4a) einstückig sind.

8. Lüftungsdüse nach Anspruch 1**, dadurch gekennzeichnet, dass** der Düsenkopf (3a) Luftleitelemente (8) aufweist.

## Claims

1. Ventilation nozzle, especially for installation in a motor vehicle, having a spherically shaped nozzle head (3a) provided with outflow openings and rotatably and pivotally mounted in a housing (2a), the mounting having a spring element (5a), **characterised in that** the ventilation nozzle has a valve such that opening and closing is accomplished by means of displacement of the nozzle head (3a) relative to the housing (2a).

2. Ventilation nozzle according to claim 1, **characterised in that** the housing (2a) has a collar (7) as an abutment to the spring element (5a).

3. Ventilation nozzle according to claim 1, **characterised in that** the spring element (5a) is in the form of a ring having spring arms (13).

4. Ventilation nozzle according to claim 3, **characterised in that** the nozzle head (3a) has a large number of holding depressions (14), in which the spring arms (13) engage in the open state.

5. Ventilation nozzle according to claim 1, **characterised in that** the ventilation nozzle (1a) is arranged to be closed by means of a valve (11a) acting in an axial direction with respect to the housing (2a).

6. Ventilation nozzle according to claim 1, **characterised in that** the valve (11a) is formed by a holding groove (15) on the nozzle head (3a), in which the spring element (5a) engages in the closed position, and by a closing element (4a) corresponding geometrically to the inflow opening (16) of the nozzle head (3a).

7. Ventilation nozzle according to claim 6, **characterised in that** the spring element (5a) and the closing element (4a) are integral.

8. Ventilation nozzle according to claim 1, **characterised in that** the nozzle head (3a) has air-guiding elements (8).

## Revendications

1. Buse d'aération destinée notamment à être installée dans un véhicule automobile, comprenant une tête de buse (3a) de forme sphérique dotée d'ouvertures de sortie d'air, qui est montée de façon rotative et pivotante dans un boîtier (2a), le support présentant un élément à ressort (5a), **caractérisée en ce que** la buse d'aération présente une soupape dont l'ouverture et la fermeture sont obtenues en déplaçant la tête de buse (3a) par rapport au boîtier (2a).

2. Buse d'aération selon la revendication 1, **caractérisée en ce que** le boîtier (2a) présente un épaulement (7) servant de butée à l'élément à ressort (5a).

3. Buse d'aération selon la revendication 1, **caractérisée en ce que** l'élément à ressort (5a) est réalisé en tant que bague dotée de bras faisant ressort (13).

4. Buse d'aération selon la revendication 3, **caractérisée en ce que** la tête de buse (3a) présente de nombreux renfoncements (14) dans lesquels les bras faisant ressort (13) s'enclenchent en position ouverte.

5. Buse d'aération selon la revendication 1, **caractérisée en ce que** la buse d'aération (1a) peut être fermée par une soupape (11a) agissant axialement par rapport au boîtier (2a).

6. Buse d'aération selon la revendication 1, **caractérisée en ce que** la soupape (11a) est formée par une rainure d'enclenchement (15) située sur la tête de buse (3a), dans laquelle l'élément à ressort (5a) se met en prise en position fermée, et par un élément de fermeture (4a) dont la forme géométrique correspond à celle de l'ouverture d'entrée d'air (16) de la tête de buse (3a).

7. Buse d'aération selon la revendication 6, **caractérisée en ce que** l'élément à ressort (5a) et l'élément de fermeture (4a) sont d'un seul tenant.

8. Buse d'aération selon la revendication 1, **caractérisée en ce que** la tête de buse (3a) présente des éléments guidant l'air (8).
